# EUROPEAN PATENT APPLICATION

(11) **EP 3 835 393 A1**
(43) Date of publication of application: **16.06.2021**
(21) Application number: 19461614.0
(22) Date of filing: 13.12.2019
(51) Int. Cl.: C10L 5/08, C10L 5/36, C10L 5/44, C10L 5/04

(54) **BROWN COAL PELLETS**

(71) Applicant: Warezak, Tomasz, 67-100 Nowa Sól (PL)
(72) Inventor: Greinert, Andrzej, 65-140 Zielona Góra (PL); Kostecki, Jakub, 65-142 Zielona Góra (PL); Mrówczynska, Maria, 65-273 Zielona Góra (PL); Szefner, Wojciech, 66-100 Sulechów (PL)
(74) Representative: Górska, Anna

(57) **Abstract**

The object of this invention is a pellet based on lignite and waste wood, usable as an energy material in the form of a solid fuel. Lignite-based pellet is characterized in that the mass fractions of lignite and wood chips are in the range of 75-95 wt% and 5-25 wt%, respectively.

## Description

The object of this invention is a pellet based on lignite and waste wood, usable as an energy material in the form of a solid fuel.

In the Lubuskie Province, lignite is obtained from deposits located in the vicinity of 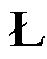 agów Lubuski, exploited by Kopalnia W 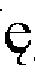 gla Brunatnego Sieniawa Sp. z o.o. (KWB Sieniawa, Lignite Mine Sieniawa Co. Ltd.). Annual lignite output amounts to approximately 100,000 Mg (Kasztelewicz 2018). Fine coal from Sieniawa is characterised by low level of contaminants in the raw material. However, combustion of this material is a major source of greenhouse gases, as well as fly ash and bottom ash.

Waste wood, abundant in the Lubuskie region due to developed forestry and woodworking industry, is an interesting solid fuel and an additive used for co-combustion with other solid fuel types. Such waste wood contains 43-51% of carbon, and their gross calorific value amounts to 18.5-20 MJ·kg⁻¹, and hence waste wood can be considered as a valuable energetic material (Wzorek 2012). Advantageously, the ash content of such waste is low and ranges from 0.4 to 2.0% (Wzorek 2012). Considering the high cost of wood produced in a typical woodworking setting, smallwood and slash from maintenance of trees and shrubs are the main sources for the pelletization process (Moya et al. 2019).

As lignite cannot be immediately replaced with other energy sources, the current problems to be solved include further development of lignite combustion technology, and its co-combustion with renewable materials. With this regard, optimizing the composition of fuel mixtures, increasing the surface of such pelletized fuel mixtures, and optimizing the operating conditions of boilers are the most important issues.

Polish patent application P412645 A1 discloses a method for pellet manufacturing, wherein lignite or bituminous coal in the amount of 65-98 wt%, particle size of below 10 mm, and moisture content of 3-40%, is mixed with lake marl in the amount of 2-35 wt%, particle size of below 10 mm, moisture content of 3-40%, and calcium carbonate content of >50%, while the molar ratio of calcium in the lake marl to sulphur in lignite or bituminous coal ranges from 2 to 5.

PL177353 B1 discloses a method for briquetted lignite manufacturing with a reduced SO₂ emission upon combustion, wherein sulphur-binding additives are added to lignite. The aim of the said invention is to provide a method allowing for better sulphur binding in the ash, without negative impact on the briquetting process. This aim was realised by mixing raw lignite with suspended calcium additives of sulphur-binding properties, and subsequent addition of binding-inert fuel, particularly ground bituminous coke, to this mixture.

Polish patent application P424486 A1 relates to the method for manufacturing biocoal briquettes. The said method of manufacturing biocoal briquettes involves mixing of prepared paste containing fine-particle sized bituminous coal or lignite in the amount of 1-98 wt% with 69-1% of sawdust, 30-1% of binder, additives (catalysts and plasticizers), and a small amount of water. Thus obtained mixture is concentrated using methods known in the art in order to obtain a briquette-shaped product. Biocoal briquettes, as a product manufactured using the above-mentioned method, has a regular spatial form in a shape similar to a cube, preferably with side dimensions a = 10 cm, or similar to a cuboid, preferably with the following dimensions: a = 5; b = 5; h = 10 cm.

Another patent application P411345 A1 discloses a method for manufacturing ecological briquette, wherein gelled potato starch (particle size of less than 20 µm) in the amount of 3-4 wt% dry matter (DM) is added to ground charcoal and fine-particle sized sawdust from deciduous trees (particle size of less than 1 mm in both case) in the amount of 20-30 wt%, mixed vigorously with a high-speed stirrer, thus obtaining very high homogeneity of components and preventing the formation of too large agglomerates.

The aim of this invention was to obtain a modified composition of lignite and waste wood-based pellet with improved environmental parameters of combustion when compared to standard products manufactured from lignite. In addition, the inventors aimed to decrease the environmental burden from combustion of the modified pellet by decreased gas emission into the atmosphere, and by loading the ash with potentially bioavailable components.

There is provided a lignite-based pellet characterized in that the mass fractions of lignite and wood chips are in the range of 75-95 wt% and 5-25 wt%, respectively.

Preferably, the pellet contains a fine lignite fraction with particle size of < 6 mm, with the following parameters: dry mass content of 88.5±1.1%, moisture content of 11.1±1.1%, organic matter content of 66.8±3.6%, organic carbon content 41.4±4.6%, calorific value of 9-10 MJ·kg⁻¹, ash content of 6-9%.

Preferably, the pellet contains an inhomogeneous fraction of wood chips with particle sizes ranging from 1.5 to 3.5 cm.

The obtained lignite and waste wood-based pellet according to the invention is easy to manufacture, being stable upon storage, transportation, and use. Thanks to the content of wood chips, the obtained pellet has a higher calorific value and can be considered as a good additive enhancing the parameters of solid fuel based on lignite.

The subject of this invention is described in the non-limiting embodiments.

### Example 1

Lignite and wood chips were used as starting materials for testing.

Lignite (L) is a raw material obtained from KWB Sieniawa sp. z o.o. Used for testing was lignite fraction with particle size of < 6 mm, with the following declared parameters: dry mass content of 88.5±1.1%, moisture content of 11.1±1.1%, organic matter content of 66.8±3.6%, organic carbon content 41.4±4.6%, calorific value of 9-10 MJ·kg⁻¹, ash content of 6-9%. The lignite deposit localized in the Sieniawa area, Swiebodzin district, 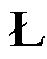 agów and Sul 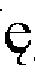 cin municipalities (Lubuskie Province), is the longest known and exploited lignite deposit in Poland. Exploitation of this deposit started in 1873 (Bik 2006). In the above-defined area, lignite is present on various depths, ranging from a few to over 150 m, in a 0.5-15 meters thick deposit (Piwocki 2003).
Wood chips (WC) is a raw material obtained from a woodworking shop in Lubinicko (Swiebodzin municipality), present as an inhomogeneous fraction with particle sizes ranging from 1.5 to 3.5 cm. No additional sieving was performed prior to testing.

Mixtures of starting materials were prepared in a laboratory by outweighing components listed in Table 1. Each mixture was then ground to obtain fully homogeneous properties prior to further analysis. Abbreviations: L = lignite, WC = wood chips.

**Table 1: Composition of pellet mixtures**

| **Mixture** | **Composition of components** | **Ratio of components** |
|---|---|---|
| L | L | 100% |
| M1 | L + WC | 95 + 5% |
| M2 | L + WC | 90 + 10% |
| M3 | L + WC | 85 + 15% |
| M4 | L + WC | 80 + 20% |
| M5 | L + WC | 75 + 25% |

### Example 2: Preparation of pellets and their physical analysis

Having received each combination of samples for laboratory analyses, test mixtures were pelletized using the ZLSP200B pellet machine (Anyang GEMCO Energy Machinery Co., Ltd.), powered by a Y132M-4 three-phase motor (7.5 kW) with the rotational speed of 1440 RPM, standard: JB/T 10391-2008, processing capacity: 200-300 kg of material per hour.

Feeding materials of natural moisture content were mixed in specific ratios (Table 1). 6 mm diameter die was used for pellet production. Die was not lubricated. During processing, the speed of pellet machine rotations was not adjusted. In order to improve the efficiency, shaft pressure against the die was refined. Each mixture intended for pelletization was passed through the machine until pellets of adequate quality were obtained; in some instances the process was repeated three times. Having obtained 1 kg of pellet from each of the test mixtures, the resulting material rested for 24 hours prior to packaging. After running each batch of the text mixture, oat hulls were passed through the pelleting machine in order to clean the sieve before working with the next mixture. Each time, the first part of produced pellet was discarded in order to dispose of oat hull residue in subsequent finished mixtures. Basic energetic characteristics for the obtained pellets were determined in laboratory conditions. The results are presented in Table 2.

**Table 2. Physical properties of pellets**

| **Pellet** | **Moisture content [%]** | **Dry mass content [%]** | **Ash content [%_{DM}]** | **Calorific value (MJ·kg_{DM}⁻¹)** |
|---|---|---|---|---|
| L | 18.50 | 81.50 | 15.71 | 18.90 |
| M1 | 10.62 | 89.38 | 14.99 | 19.25 |
| M2 | 8.36 | 91.64 | 15.06 | 19.35 |
| M3 | 7.74 | 92.26 | 14.42 | 19.57 |
| M4 | 5.93 | 94.07 | 13.29 | 19.90 |
| M5 | 6.37 | 93.63 | 13.99 | 20.06 |

The addition of wood chips in the pellet composition resulted in an improved calorific value when compared to lignite only, and can be considered as a good additive enhancing the properties of lignite-based fuel.

### Example 3: Atmospheric emission analysis

The following solid pellets were analysed: lignite (L) pellet, M5 mixture (75% lignite + 25% wood chips) pellet, and M6 mixture (95% lignite + 5% wood dust) pellet.

Emission of CO, SO₂ and H₂ in the combustion gas was analysed versus selected thermal parameters, combustion gas temperature and heat receiver temperature, as well as air flow. The results of the atmospheric emission in a 6-hour measurement cycle for the pellet combustion revealed large fluctuations in the content of the analysed gases in the combustion gas. For the majority of the tested elements, such fluctuation seems to be a permanent characteristic, independent of the boiler worktime for a particular solid fuel.

Combustion gas temperature (CGT) ranged widely from 63.4 to 171.4°C. Average CGT values for combustion of individual fuels were as follows: L: 108.4 ±27.4°C; M5: 126.7 ±20.5°C; M6: 114.4 ±24.9°C.

Concentrations of gases being products of oxidation of compounds contained in the tested fuels, i.e., carbon monoxide (CO), and sulphur dioxide (SO₂), were also analysed.

Carbon monoxide (CO) emission was fluctuating highly, ranging from 35 to 2861 ppm, with the average of 293-484, depending on the type of the combusted pellet. Having analysed the boiler operation in terms of this measure, the M5 material (pellet obtained from a mixture of lignite and wood chips) combustion was clearly more stable. In this case, average CO emission (293 ±159 ppm) noted was lower when compared to the other fuels. What can be concerning in the case of lignite-only pellet it is tendency to incomplete combustion, shown by large peak CO emission of 2861 ppm. The addition of waste wood proved to be a preventive measure for this phenomenon.

Sulphur dioxide (SO₂) emission was also fluctuating widely, ranging from 0 to 960 ppm, with the average of 122-217 ppm for individual pellets. The highest SO₂ emissions were obtained for the combustion of lignite (L)-only pellet, with the average value of 217 ±242 ppm. Pelletized mixtures with waste wood were characterized by a lower average SO₂ emission of 122 ±96 and 172 ±159 ppm for M5 and M6 mixtures, respectively. The peak emission for L was considerably greater when compared to other fuels, and amounted to 960 ppm of SO₂ vs 417 ppm for pelletized M5 and 569 ppm for pelletized M6.

Gaseous combustion products in the combustion gas, indicating reductive conditions, i.e., hydrogen gas (H₂) concentration, were also analysed.

Hydrogen gas (H₂) emission varied, ranging from 0 to 615 ppm, with the average of 54.6-78.6 ppm for individual pellets. The highest H₂ emissions were obtained for the combustion of pelletized M6 mixture, with the average value of 78.6 ±117.2 ppm. Other pelletized mixtures were characterized by a lower average H₂ emission of 59.8 ±115.4 and 54.6 ±80.4 ppm for L and M5 mixture, respectively.

### Example 3: Ash analysis

**Table 3. Analysis of chemical composition of ashes from L fuel combustion, method according to the KJ-IW-L-SPE-001 standard**

| Quantified element | LOQ mg·kg⁻¹ | **Result** |
|---|---|---|
| K | 0.025 | **30602** |
| P | 0.04 | **10610** |
| Mn | 0.0016 | **1386** |
| Cu | 0.0005 | **18.9** |
| Ni | 0.05 | **23.6** |
| Pb | 0.003 | **12.6** |
| Cd | 0.001 | **8.36** |

**Table 4. Analysis of the chemical composition of ashes from M5 fuel combustion (according to the invention), method according to the KJ-IW-L-SPE-001 standard**

| Quantified element | LOQ mg·kg⁻¹ | **Result** |
|---|---|---|
| K | 0.025 | **23007** |
| P | 0.04 | **11764** |
| Mn | 0.0016 | **1640** |
| Cu | 0.0005 | **29.2** |
| Ni | 0.05 | **17.0** |
| Pb | 0.003 | **1.51** |
| Cd | 0.001 | **1.14** |

Ash obtained after lignite (L) combustion contained 3% of potassium and 1% of phosphor. In the analysis, the potassium (K) level after the combustion of M5 mixture was lower (2.3%), while the phosphor (P) level was comparable to other materials. The enrichment of the tested ashes with heavy metals (Cu, Ni, Pb, Cd) frequently occurring in such types of materials shows a dependency on the type of combusted fuel. The lowest Cu level was found in the ash from the L combustion (18.9 mg·kg⁻¹), while a larger level characterised the other fuel, M5 (29.2 mg·kg⁻¹). Nevertheless, in each case the values can be classified as low. A contrary trend was observed for nickel; in this case the highest level was found in the ash from unmixed lignite (L; 23.6 mg·kg⁻¹), with lower values for materials from the combustion of M5 fuel (17.0 mg·kg⁻¹). Also in this case, such value can be classified as low. Major differences were observed for Pb. Pb level was significantly greater in the ash from L combustion (12.6 mg·kg⁻¹) than in the ash from M5 combustion (1.51 mg·kg⁻¹). Cd level was trending similarly: WB: 8.36; M5: 1.14 mg·kg⁻¹. With respect to this element, Cd level in the ash from M5 combustion is not concerning, while in the case of L the level is greatly higher than cadmium concentration in soils.

Wood chips, i.e. waste wood produced in large amounts in woodworking plants, are a good and desirable additive for the manufacture of pellets containing the majority of lignite. Such additive allows to reduce CO and SO₂ emissions, while maintaining an acceptable level of NO₂ emission. The carried out tests confirm the ecological safety of the analysed fuel materials and indicate the advantage of lignite pellet modified by the addition of wood chips over other experimental combinations.

### References

Bik A., 2006. Spogl 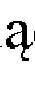 damy w przysz 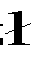 o 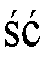 przez pryzmat środowiska naturalnego. KBI W 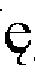 giel Brunatny, No. 1/54, PPWB, http://www.ppwb.org.pl/wb/54/7.php
Kasztelewicz Z., 2018. Raport o stanie branży w 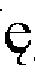 gla brunatnego w Polsce i w Niemczech wraz z diagnoz 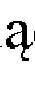 dzia 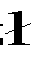 a 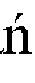 dla rozwoju tej branzy w I polowie XXI wieku, Kraków, pp. 79.
Piwocki M., 2003. Zasoby w 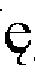 gla brunatnego w miocenie rejonu Sieniawy na Ziemi Lubuskiej. KBI W 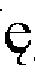 giel Brunatny, No. 2, 11-15
Wzorek M., 2012. Characterisation of the properties of alternative fuels containing sewage sludge. Fuel Processing Technology 104: 80-89.

## Claims

1. Lignite-based pellet **characterized in that** the mass fractions of lignite and wood chips are in the range of 75-95 wt% and 5-25 wt%, respectively.

2. Pellet according to claim 1 **characterized in that** the fine lignite fraction of a particle size of < 6 mm, has the following parameters: dry mass content of 88.5±1.1%, moisture content of 11.1±1.1%, organic matter content of 66.8±3.6%, organic carbon content 41.4±4.6%, calorific value of 9-10 MJ·kg⁻¹, ash content of 6-9%.

3. Pellet according to claim 1 **characterized in that** the particle size of the wood chips fraction ranges from 1.5 to 3.5 cm.
